(19) Europäisches Patentamt
European Patent Office
Office européen des brevets

(11) **EP 1 440 297 B1**

(12) **FASCICULE DE BREVET EUROPEEN**

(45) Date de publication et mention
de la délivrance du brevet:
**08.06.2005   Bulletin 2005/23**

(21) Numéro de dépôt: **02795338.9**

(22) Date de dépôt: **24.10.2002**

(51) Int Cl.⁷: $G01J\ 3/51$, A61C 19/10

(86) Numéro de dépôt international:
**PCT/FR2002/003663**

(87) Numéro de publication internationale:
**WO 2003/036244 (01.05.2003 Gazette 2003/18)**

(54) **APPAREIL DE MESURE DE COLORIMETRIE DENTAIRE**

DENTALE FARBMESSVORRICHTUNG

DENTAL COLORIMETRY MEASURING APPARATUS

(84) Etats contractants désignés:
**AT BE BG CH CY CZ DE DK EE ES FI FR GB GR IE IT LI LU MC NL PT SE SK TR**

(30) Priorité: **24.10.2001  FR 0113760
24.10.2001  FR 0113761**

(43) Date de publication de la demande:
**28.07.2004   Bulletin 2004/31**

(73) Titulaires:
• **Delgrande, Jean-Pierre
92100 Boulogne Billancourt (FR)**
• **Chokron, Emile
75015 Paris (FR)**

(72) Inventeurs:
• **Delgrande, Jean-Pierre
92100 Boulogne Billancourt (FR)**
• **Chokron, Emile
75015 Paris (FR)**

(74) Mandataire: **Michelet, Alain et al
Cabinet Harlé et Phélip
7, rue de Madrid
75008 Paris (FR)**

(56) Documents cités:
WO-A-00/12026          DE-A- 19 546 634
FR-A- 2 768 513          US-A- 6 111 650
US-B1- 6 249 348

**Description**

L'invention concerne un appareil d'analyse colorimétrique utilisable pour la mesure de la teinte d'une dent.

On sait qu'on recourt couramment à une telle mesure lors de la réalisation d'une prothèse dentaire.

Le brevet FR-2.768.513 ayant les mêmes titulaires que la présente demande concerne un procédé d'analyse colorimétrique comparative et un dispositif correspondant. On pourra avantageusement s'y référer pour connaître le contexte de la présente invention et un procédé auquel l'appareil de la présente est particulièrement bien adapté.

Le brevet DE-A- 195 46634 divulgue une tête de mesure de couleurs utilisant un commutateur opto-mécanique.

En effet, la mise en oeuvre de l'invention précédente mentionnée plus haut a conduit à la mise au point de l'appareil de mesure objet de la présente demande.

Le premier objectif de la présente invention est la réalisation d'un appareil qui permette la réalisation d'une mesure dans de bonnes conditions et s'affranchisse en particulier des effets parasites susceptibles d'être engendrés par la lumière ambiante.

Un autre objectif de la présente invention est la réalisation d'un appareil dont l'utilisation pour le praticien soit particulièrement simple et qui assure au patient des conditions d'hygiène parfaite.

Un autre objet de l'invention est de permettre la réalisation d'un appareil de mesure de colorimétrie dentaire dans des conditions économiques optimisées.

A cet effet, l'invention concerne un appareil de mesure de colorimétrie dentaire comportant toutes les caractéristiques de la revendication 1. Les revendications dépendantes définissent des modes de réalisation additionnels.

L'invention sera décrite plus en détail en référence aux dessins annexés dans lesquels :

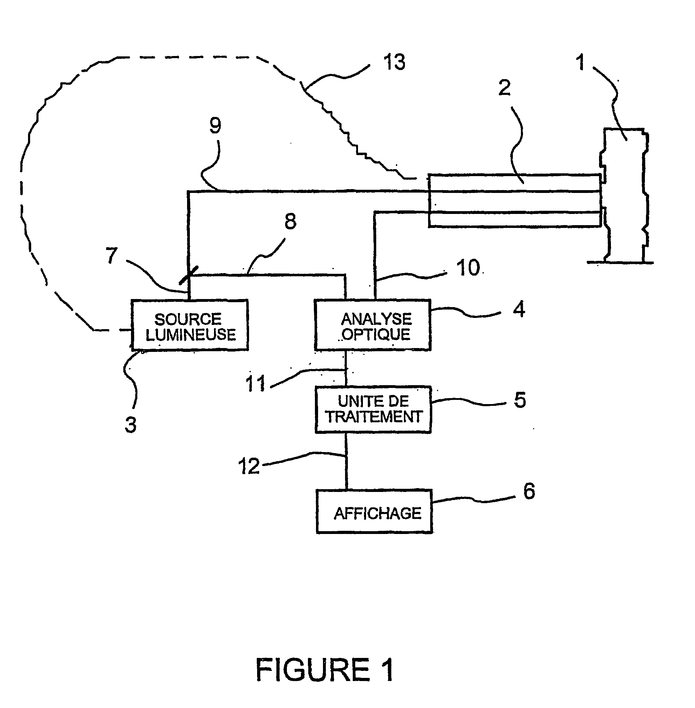

- la figure 1 est une représentation générale de l'appareil objet de l'invention ;
- la figure 2 est une représentation schématique de la tête de mesure ;
- la figure 3 est une représentation du principe électrique de l'appareil.

La dent 1 à mesurer est placée au contact de la tête de mesure 2 qui est alimentée par une source lumineuse 3 et produit un flux lumineux diffusé qui est traité par l'analyseur 4 qui fournit le résultat de son analyse à une unité de traitement 5 et qui, lui-même, par l'intermédiaire de l'afficheur 6, fournit le classement de la dent par rapport au nuancier.

La lumière émise par la source 3 est collectée par un faisceau de fibres 7 et une partie de cette énergie lumineuse est directement dirigée par le faisceau de fibres 8 vers l'analyseur optique 4. Une autre partie du flux de la source est transmise par le faisceau de fibres 9 à la tête de mesure 2 pour l'illumination de la dent 1. La lumière diffusée par la dent 1 est collectée par l'intermédiaire de la tête de mesure 2 au travers du faisceau de fibres 10 et adressée vers l'analyseur optique 4. Des liaisons électriques 11 et 12 établissent les liens respectivement entre l'analyseur optique 4 et l'unité de traitement 5 d'une part, et entre cette unité de traitement 5 et l'afficheur 6 d'autre part.

Une liaison électrique 13 relie la tête de mesure 2 à la source lumineuse 3 permettant la commande de la source selon des modalités qui seront décrites plus loin à partir de la tête de mesure 2.

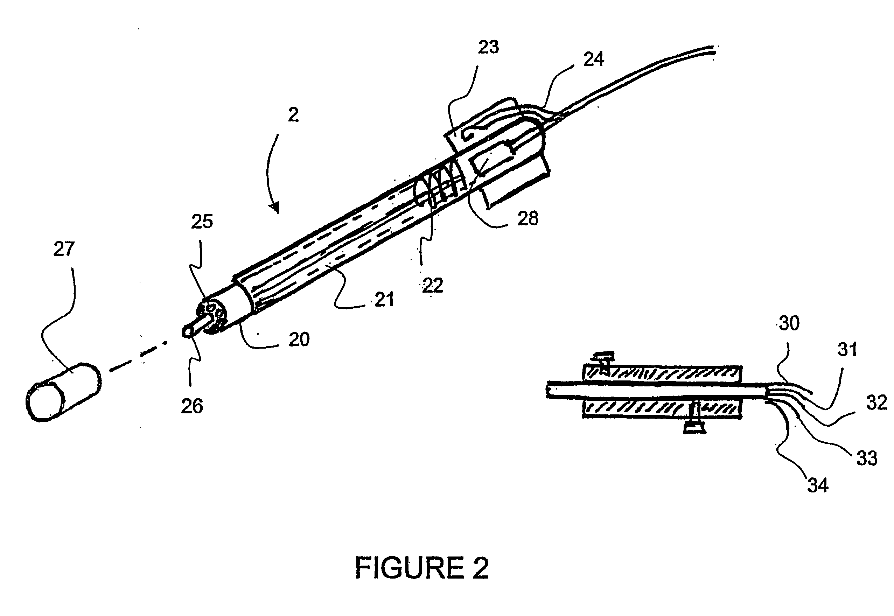

La tête de mesure 2 est plus précisément représentée sur la figure 2. Elle comporte un corps 20 par rapport auquel un fourreau 21 est mobile par coulissement. Un ressort de rappel 22 détermine la position relative au repos du fourreau 21 par rapport au corps 20 et un contacteur 23 actionné par le mouvement relatif 21 par rapport au corps 20 assure la mise sous tension de la source 3 et par là le déclenchement de la mesure. A cet effet, les conducteurs électriques 24 relient le contacteur 23 à la source 3. Ainsi, la tête comporte un fourreau extérieur et un corps interne comportant les fibres optiques, le fourreau et le corps étant mobiles en translation par coulissement l'un par rapport à l'autre, afin d'actionner un commutateur électrique déclenché par la pression du corps sur la dent et commander la mesure, un ressort de rappel déterminant la position au repos du fourreau par rapport au corps.

Le corps 20 porte des fibres d'émission 25 qui éclairent la dent 1 lors de la mesure à partir de la source 7. Ces fibres d'émission 25 sont reliées à la source 3 par l'intermédiaire du faisceau de fibres 9.

Une fibre centrale 26 de collecte de la lumière collecte la lumière diffusée par la dent 1 et l'adresse par l'intermédiaire du faisceau de fibres 10 à l'analyseur optique 4.

Les extrémités des fibres d'émission 25 et de collecté 26 sont polies, ce qui permet d'optimiser la transmission de la lumière dans un sens comme dans l'autre, entre la dent et la tête de mesure.

La fibre centrale 26 de réception de la lumière est avantageusement plus longue, venant ainsi à un contact plus rapproché avec la dent que les fibres d'émission.

Pour obtenir de bonnes conditions hygiéniques, la tête de mesure 2 est munie d'un capuchon jetable 27 transparent qui est le seul élément à venir directement en contact avec le patient.

La fibre de collecte 26 est couplée à un mélangeur-distributeur 28 qui est lui-même un élément optique en forme de fibre d'un diamètre généralement supérieur à celui de la fibre de collecte 26.

Ce mélangeur-distributeur 28 est relié à cinq fibres (ou faisceaux de fibres). Chacune de ces fibres est destinée à la mesure, soit d'une couleur 30 bleu 31, rouge 32, vert 33 ou de la luminance ou clarté 34. Ce mélangeur-distributeur 28 permet d'obtenir une mesure homogène même si la dent comporte de faibles variations locales de sa couleur ou de sa teinte.

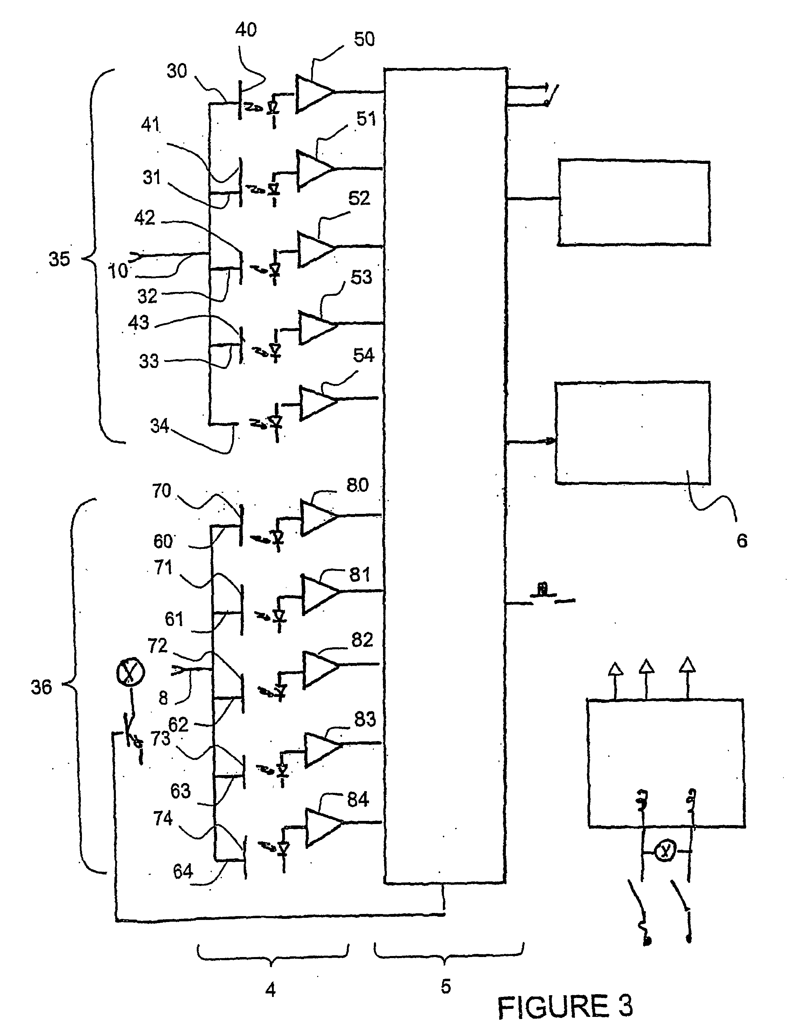

Sur la figure 3, sont représentés de façon détaillée l'analyseur optique 4, l'unité de traitement 5 et le dispositif d'affichage 6.

L'analyseur optique 4 est composé de deux modules, le module de lecture 35 recevant le flux lumineux diffusé par la dent mesurée au travers du faisceau 10 et le module de référence 36 recevant le flux lumineux provenant directement de la source 3 au travers du faisceau de fibres 8.

Chacun de ces modules 35 et 36 effectue des traitements et mesures comparables sur les flux lumineux reçus, le flux lumineux transmis par la fibre 30 est filtré par un filtre jaune 42 et mesuré par un récepteur 50. De même, le flux lumineux transmis par la fibre 31 est filtré par un filtre bleu 41 et mesuré par un récepteur 51, le flux lumineux transmis par la fibre 32 est filtré par un filtre rouge 42 et mesuré par un récepteur 52, le flux lumineux transmis par la fibre 33 est filtré par un filtre vert 43 et mesuré par un récepteur 53, le flux lumineux transmis par la fibre 34 n'est pas filtré et sa mesure par un récepteur 54 fournit la mesure de luminance du flux diffusé.

Il en est de même pour le flux lumineux provenant de la source transmis par le faisceau 8 qui est divisé sur des fibres 60, 61, 62, 63, 64 et, après filtration éventuelle par les filtres 70, 71, 72 et 73, est mesuré par les récepteurs 80, 81, 82, 83, 84 fournissant des mesures respectives de la composante jaune, de la composante bleue, de la composante verte et de la clarté du flux provenant de la source.

L'unité de traitement 5 effectue des rapports de façon à fournir l'évaluation de la teinte recherchée.

Plus précisément, cette mesure de la teinte consiste en deux opérations successives.

Selon la première opération, après mise sous tension de l'appareil, un calibrage est réalisé et qui consiste à prendre une mesure de teinte et de luminosité du calibre. Ceci se fait en présentant la pointe de la tête de mesure sur le calibre et en y exerçant une faible pression.

Un flux lumineux est alors envoyé sur le calibre et les paramètres sont gardés en mémoire :

Jc : valeur mesurée sur le filtre jaune
Bc : valeur mesurée sur le filtre bleu
Rc : valeur mesurée sur le filtre rouge
Vc : valeur mesurée sur le filtre vert
JLc : valeur mesurée sur le filtre jaune directement à partir de la source durant le calibrage.
BLc : valeur mesurée sur le filtre bleu directement à partir de la source durant le calibrage
RLc : valeur mesurée sur le filtre rouge directement à partir de la source durant le calibrage
VLc : valeur mesurée sur le filtre vert directement à partir de la source durant le calibrage

La valeur Lc est la luminosité du calibre, c'est-à-dire la valeur mesurée sans filtrage sur celui-ci.

La deuxième opération consiste à effectuer les mesures sur la dent à mesurer elle-même et, de manière comparable, on obtient les mesures :

Jd, Bd, Rd, Vd

On considère alors les mesures absolues pour chaque couleur comme fournies par les rapports suivants :

Jaune : Jd/Jc x JLc/JLd
Bleu : Bd/Bc x BLc/BLd
Rouge : Rd/Rc x VLc/VLd
Vert : VdNc x VLc/VLd prenant en compte le calibrage, on obtient les ratios suivants :

$$\text{Jaune/bleu} : \frac{Jd/Jc}{Bd/Bc} \times \frac{JLc/JLd}{BLc/BLd}$$

$$\text{Rouge/vert} : \frac{Rd/Rc}{Vd/Vc} \times \frac{RLc/RLd}{VLc/VLd}$$

On évalue ensuite la luminosité de la dent par rapport à celle du calibre dans des conditions analogues :

Lc dans la luminosité du calibre
LLc dans la luminosité de la lampe durant le calibrage
Ld dans la luminosité de la dent pendant la mesure de la dent
LLd dans la luminosité de la dent durant la mesure de la dent

La formule donnant la luminosité de la dent est définie de la manière suivante :

$$\text{Luminosité} = Ld/Lc \times LLc/LLd$$

Dans une variante de mise en oeuvre, le nuancier (ou teintier) est virtuel et les valeurs colorimétriques sont stockées dans un support électronique sous forme de données numériques, sélectionnables et lisibles par l'appareil de l'invention. Ce teintier peut ainsi être stocké dans une carte type carte à puce. Dans une variante complémentaire, on peut également disposer sur la carte à puce des pavés de nuances afin de permettre l'utilisation de ladite carte avec un appareil permettant la lecture de la carte (nuancier virtuel) ou non (nuancier réel, avec lecture des nuances effectuée par la tête de lecture).

Le mélangeur-distributeur est préférentiellement réalisé dans un matériau diffusant la lumière. La fibre optique de collecte, disposée à l'extrémité de la tête est préférentiellement une baguette formée d'un assemblage de fibres isolées et séparées optiquement et soudées parallèlement ensemble. Une telle baguette est, par exemple produite par la société SCHOTT sous la référence générique FST. Ce type de baguette peut éventuellement être courbé par la chaleur dans le cas où l'on souhaite avoir une extrémité de tête recourbée. La baguette peut être protégée par une gaine externe, notamment métallique. Dans une variante préférée de mise en oeuvre, la baguette de collecte ou, mieux, la partie antérieure, vers la dent, de la baguette, peut être amovible afin de permettre une stérilisation de la pièce du dispositif qui est effectivement au contact de la dent. Avec une telle structure de fibre de collecte à type de baguette et qui est amovible, l'utilisation d'un capuchon jetable transparent peut être omise, la baguette étant stérilisée entre utilisation sur différents patients.

Différentes modifications peuvent être apportées au dispositif décrit plus haut sans sortir du cadre de l'invention. En particulier :

- La miniaturisation des composants permet d'insérer un grand nombre d'entre eux dans la tête de mesure. La source lumineuse peut être une diode électroluminescente blanche insérée dans la tête et l'analyseur peut être également, totalement ou partiellement, porté par cette même tête.
- Le classement de la dent est sa comparaison à des références. On cherche à déterminer la référence par rapport à laquelle la dent mesurée présente les plus faibles écarts.
- L'effet de la lumière parasite est avantageusement neutralisé par sa prise en compte avant chaque mesure.

**Revendications**

1. Appareil de mesure de colorimétrie dentaire comportant :

   - une source lumineuse blanche (3),
   - des moyens (7), (9) et (2) permettant de projeter le flux lumineux émis par la source sur une dent à mesurer,
   - des moyens de collecte (2) du flux diffusé par ladite dent,
   - des moyens de sélection spectrale (42) du flux diffusé,
   - des moyens de mesure (50) des flux lumineux spectralement sélectionnés,
   - des moyens de traitement (5) du résultat de ces mesures permettant le classement de la dent mesurée par rapport à un nuancier,

   ledit appareil comportant un ensemble d'émission et de réception et une tête de mesure (2) venant au contact de la dent à mesurer, la tête de mesure (2) étant reliée à l'ensemble d'émission-réception par un faisceau de fibres optiques (9) et (10),
   **caractérisé en ce que** la tête de mesure (2) comporte un corps (20) à un fourreau (21), ledit fourreau (21) étant mobile par coulissement sur le corps (20), un ressort de rappel (22) pour déterminer la position relative du fourreau (21) par rapport au corps (20) au repos, un contacteur de commutation électrique pouvant être actionné par ledit mouvement de coulissement, le commutateur électrique pouvant être déclenché par la pression de la tête (2) sur la dent et pouvant ainsi commander la mesure, le ressort (22) et le commutateur électrique étant disposé vers l'extrémité opposée à l'extrémité de la tête de mesure (2) venant au contact de la dent

2. Appareil de mesure de colorimétrie dentaire selon la revendication 1, **caractérisé en ce que**, à l'extrémité de la tête de mesure venant en contact avec la dent, les fibres d'émission sont en retrait par rapport à la fibre de collecte.

3. Appareil de mesure de colorimétrie dentaire selon l'une des revendications 1 et 2, **caractérisé en ce que** la tête de mesure est équipée d'un capuchon hygiénique jetable.

4. Appareil de mesure de colorimétrie dentaire selon l'une des revendications 1 à 3, **caractérisé en ce que** faisceau de fibres optiques comporte une fibre optique de collecte au moins partiellement de grand diamètre entourée de fibres d'émission de petit diamètre.

5. Appareil de mesure de colorimétrie dentaire selon l'une des revendications 1 à 4, **caractérisé en ce que** la fibre optique de collecte comporte un mélangeur distributeur de grand diamètre.

6. Appareil de mesure de colorimétrie dentaire selon la revendication 5, **caractérisé en ce que** des fibres de sélection sont couplées au mélangeur afin de collecter des flux destinés respectivement à une mesure de luminance et à chaque mesure spectrale.

7. Appareil de mesure de colorimétrie dentaire selon l'une quelconque des revendications 1 à 6, **caractérisé en ce que** les moyens de sélection spectrale sont des filtres à large bande passante.

8. Appareil de mesure de colorimétrie dentaire selon la revendication 7, **caractérisé en ce que** les filtres sont respectivement jaune, bleu, rouge et vert.

9. Appareil de mesure de colorimétrie dentaire selon l'une quelconque des revendications 1 à 8, **caractérisé en ce qu'**il comporte des moyens d'étalonnage pour mesurer, pour chaque mesure de dent, les flux spectralement sélectionnés, selon la même loi que celle appliquée à la lumière diffusée, directement sur la source et que les moyens de traitement peuvent exploiter les rapports spectraux constitués pour chaque sélection spectrale par le rapport de la mesure du flux diffusé à celle de la source.

10. Appareil de mesure de colorimétrie dentaire selon l'une des revendications 1 à 9, **caractérisé en ce qu'**il comporte des moyens d'évaluation de la luminosité comportant la mesure de la luminosité d'un calibre, la mesure de la luminosité de la source pendant la mesure du calibre, la mesure de la luminosité de la dent et la mesure de la luminosité de la lampe pendant la mesure de la dent.

11. Appareil de mesure de colorimétrie dentaire selon l'une des revendications 1 à 10, **caractérisé en ce que** le nuancier est un nuancier réel dont chaque teinte a été mesurée préalablement à la mesure de la dent

12. Appareil de mesure de colorimétrie dentaire selon l'une des revendications 1 à 10, **caractérisé en ce que** le nuancier est un nuancier virtuel.

**Patentansprüche**

1. Messgerät für Zahnkolorimetrie, umfassend:

  - eine Weißlichtquelle (3),

  - Mittel (7, 9 und 2), die es ermöglichen, den von der Quelle abgegebenen Lichtstrom auf einen zu messenden Zahn zu projizieren,

  - Mittel (2) zum Sammeln des von dem Zahn gestreuten Lichtstroms,

  - Mittel (42) zur Spektralauswahl des gestreuten Lichtstroms;

  - Mittel (50) zur Messung der spektral ausgewählten Lichtströme,

  - Mittel (5) zur Bearbeitung des Ergebnisses dieser Messungen, die die Einordnung des gemessenen Zahns im Vergleich mit einer Farbpalette ermöglichen,

  wobei das Gerät eine Sende- und Empfangseinheit und einen Messkopf (2) umfasst, der mit dem zu messenden Zahn in Kontakt kommt, wobei der Messkopf (2) mit der Sende-Empfangseinheit durch ein optisches Faserbündel (9 und 10) verbunden ist,

**dadurch gekennzeichnet, dass** der Messkopf (2) einen Körper (20) mit einer Hülle (21), wobei die Hülle (21) durch Gleiten auf dem Körper (20) beweglich ist, eine Rückstellfeder (22) zur Bestimmung der Relativposition der Hülle (21) in Bezug auf den Körper (20) in Ruhestellung, einen elektrischen Umschalter, der durch die Gleitbewegung betätigt werden kann, umfasst, wobei der elektrische Umschalter durch den Druck des Kopfes (2) auf den Zahn ausgelöst werden und somit die Messung steuern kann, wobei die Feder (22) und der elektrische Umschalter zu dem Ende hin angeordnet sind, das dem Ende des Messkopfes (2), das mit dem Zahn in Kontakt kommt, gegenüber liegt.

2. Messgerät für Zahnkolorimetrie nach Anspruch 1, **dadurch gekennzeichnet, dass** an dem Ende des Messkopfes, das mit dem Zahn in Kontakt kommt, die Sendefasern in Bezug auf die Sammelfaser zurückgesetzt sind.

3. Messgerät für Zahnkolorimetrie nach einem der Ansprüche 1 und 2, **dadurch gekennzeichnet, dass** der Messkopf mit einer wegwerfbaren Hygienekapsel versehen ist.

4. Messgerät für Zahnkolorimetrie nach einem der Ansprüche 1 bis 3, **dadurch gekennzeichnet, dass** das Bündel von optischen Fasern eine optische Sammelfaser mit zumindest teilweise großem Durchmesser umfasst, die von Sendefasern mit kleinem Durchmesser umgeben ist.

5. Messgerät für Zahnkolorimetrie nach einem der Ansprüche 1 bis 4, **dadurch gekennzeichnet, dass** die optische Sammelfaser einen Verteilermischer mit großem Durchmesser umfasst.

6. Messgerät für Zahnkolorimetrie nach Anspruch 5, **dadurch gekennzeichnet, dass** Auswahlfasem an den Mischer gekoppelt sind, um Lichtströme zu sammeln, die für eine Leuchtdichtemessung bzw. für jede Spektralmessung bestimmt sind.

7. Messgerät für Zahnkolorimetrie nach einem der Ansprüche 1 bis 6, **dadurch gekennzeichnet, dass** die Spektralauswahlmittel Breitbandfilter sind.

8. Messgerät für Zahnkolorimetrie nach Anspruch 7, **dadurch gekennzeichnet, dass** die Filter gelb, blau, rot bzw. grün sind.

9. Messgerät für Zahnkolorimetrie nach einem der Ansprüche 1 bis 8, **dadurch gekennzeichnet, dass** es Eichungsmittel umfasst, um für jede Zahnmessung die spektral ausgewählten Lichtströme nach demselben Gesetz wie dem für das gestreute Licht angewandten direkt an der Quelle zu messen, und dass die Bearbeitungsmittel die Spektralverhältnisse, die für jede Spektralauswahl durch das Verhältnis der Messung des gestreuten Lichstroms zu jener der Quelle gebildet sind, auswerten können.

10. Messgerät für Zahnkolorimetrie nach einem der Ansprüche 1 bis 9, **dadurch gekennzeichnet, dass** es Mittel zur Bewertung der Lichtstärke aufweist, welche die Messung der Lichtstärke eines Kalibers, die Messung der Lichtstärke der Quelle während der Messung des Kalibers, die Messung der Lichtstärke des Zahns und die Messung der Lichtstärke der Lampe während der Messung des Zahns umfassen.

11. Messgerät für Zahnkolorimetrie nach einem der Ansprüche 1 bis 10, **dadurch gekennzeichnet, dass** die Farbpalette eine reale Farbpalette ist, bei der jede Färbung vor der Messung des Zahns gemessen wurde.

12. Messgerät für Zahnkolorimetrie nach einem der Ansprüche 1 bis 10, **dadurch gekennzeichnet, dass** die Farbpalette eine virtuelle Farbpalette ist.

**Claims**

1. A dental colorimetry measuring instrument including:

   - a white light source (3),
   - means (7), (9) et (2) enabling to project the luminous flux emitted by the source onto a tooth to be measured,
   - means for collecting (2) the flux diffused onto said tooth,
   - means for spectral selection (42) of the diffused flux,
   - means for measuring (50) the luminous fluxes selected spectrally,
   - means for processing (5) the result of these measurements enabling classification of the measured tooth in relation to a chart of colour range, said instrument comprising an emission and reception assembly and a measuring head (2) contacting the tooth to be measured, the measuring head (2) being connected to the emission-reception assembly via a bundle of optic fibres (9) and (10),

   **characterised in that** the measuring head (2) includes a body (20) with one sheath (21), said sheath (21) being mobile by sliding over the body (20), a recall spring (22) to determine the relative position of the sheath (21) with respect to the body (20) at rest, whereas an electric switching contactor may be actuated by said sliding movement, the electric switch may be triggered by the pressure of the head (2) on the tooth and may thus control the measurement, whereas the spring (22) and the electric switch are arranged towards the end opposite the end of the measuring head (2) contacting the tooth.

2. A dental colorimetry measuring instrument according to claim 1, **characterised in that**, at the end of the measuring head in contact with the tooth, the emission fibres are retracted with respect to the collecting fibre.

3. A dental colorimetry measuring instrument according to any of the claims 1 and 2, **characterised in that** the measuring head is fitted with a single-use hygienic cap.

4. A dental colorimetry measuring instrument according to one of the claims 1 to 3, **characterised in that** the bundle of optic fibres includes an optic collection fibre at least partially of large diameter, surrounded with emission fibres of small diameter.

5. A dental colorimetry measuring instrument according to one of the claims 1 to 4, **characterised in that** the optic collection fibre includes a distributing mixer of large diameter.

6. A dental colorimetry measuring instrument according to claim 5, **characterised in that** selection fibres are coupled to the mixer in order to collect the fluxes intended respectively for luminance measurement and each spectral measurement.

7. A dental colorimetry measuring instrument according to one of the claims 1 to 6, **characterised in that** the means of spectral selection are wide passband filters.

8. A dental colorimetry measuring instrument according to claim 7, **characterised in that** the filters are respectively yellow, blue, red and green.

9. A dental colorimetry measuring instrument according to one of the claims 1 to 8, **characterised in that** it comprises calibration means for measuring, at each tooth measurement, the fluxes selected spectrally, according to the same law as that applied to the light diffused, directly onto the source and **in that** the processing means may process the spectral ratios formed for each spectral selection by the ratio of the measurement of the diffused flux to that of the source.

10. A dental colorimetry measuring instrument according to one of the claims 1 to 9, **characterised in that** it includes means for assessing the luminosity, comprising the luminosity measurement of a gauge, the luminosity measurement of the source when measuring the gauge, the luminosity measurement of the tooth and the luminosity measurement of the lamp when measuring the tooth.

11. A dental colorimetry measuring instrument according to one of the claims 1 to 10, **characterised in that** the chart of colour range is a real chart of colour range whereof each tone has been measured prior to measuring the tooth.

12. A dental colorimetry measuring instrument according to one of the claims 1 to 10, **characterised in that** the chart of colour range is a virtual chart of colour range.

**FIGURE 1**

FIGURE 2

FIGURE 3